# EUROPEAN PATENT SPECIFICATION

(11) **EP 2 779 401 B1**
(45) Date of publication and mention of the grant of the patent: **16.08.2017**
(21) Application number: 14152806.7
(22) Date of filing: 28.01.2014
(51) Int. Cl.: H02M 3/335, H02M 1/08

(54) **DC Power Supply**
Gleichstromversorgung
Alimentation électrique CC

(30) Priority: 15.03.2013 JP 2013052608
(43) Date of publication of application: 17.09.2014
(73) Proprietor: Hitachi, Ltd., Tokyo (JP); Hitachi Mito Engineering Co., Ltd., Hitachinaka-shi Ibaraki (JP)
(72) Inventor: Kojima, Tetsuo, Chiyoda-ku, Tokyo 100-8280 (JP); Shinomiya, Takeshi, Chiyoda-ku, Tokyo 100-8280 (JP); Kawamoto, Takehiro, Chiyoda-ku, Tokyo 100-8280 (JP); Muraoka, Kazufumi, Chiyoda-ku, Tokyo 100-8280 (JP); Sugiura, Tetsu, Chiyoda-ku, Tokyo 100-8280 (JP)
(74) Representative: Moore, Graeme Patrick

(56) References cited:
- EP-A2- 2 528 218
- JP-A- H11 187 662
- US-A1- 2006 220 469
- US-A1- 2010 253 305

## Description

### BACKGROUND OF THE INVENTION

### 1. Field of the Invention

The present invention relates generally to direct-current (DC) power supplies that use semiconductor elements, and more particularly, to a DC power supply using an insulating transformer.

### 2. Description of the Related Art

Power supplies that convert one form of DC power into another form of DC power (hereinafter, these power supplies are referred to as DC power supplies) are used to stabilize an unstable DC voltage, to change a DC voltage, or to electrically insulate an input line and an output line from each other. Commonly used when electrical insulation between an input line and an output line is required, in particular, is the type of DC power supply that activates a primary circuit to generate an alternating-current (AC) voltage from a DC voltage, then supplies the AC voltage to a secondary circuit via an insulating transformer, and rectifies the AC voltage into another DC voltage.

JP-1991-215166-A, herein shown as Patent Document 1, describes an example of such a DC power supply. The circuit shown in Patent Document 1 is called a flyback-type DC-DC converter, and in the simplest circuit composition of this type, a very simple DC power supply can be realized since a primary circuit can be composed of one switching element. On the other hand, such a conventional DC power supply, as with a DC reactor (choke coil) of a DC chopper circuit, needs applying a DC voltage to use an insulating transformer, so that for reasons such as restrictions on magnetic saturation of the insulating transformer, the use of the DC power supply is limited to applications that are relatively small in power supply capacity.

The DC power supply described in JP-2006-333569-A, herein shown as Patent Document 2, includes a primary circuit composed of a full-bridge converter, for which reason, the number of switching elements increases and the circuit composition becomes complex, whereas a voltage applied to an insulating transformer can be either plus or minus and thus the DC power supply can also be used in applications of relatively large power-supply capacities.

The present invention is intended for a DC power supply of a relatively large power-supply capacity. More particularly, the invention is intended for a single-pulse-driven type of DC-DC converter that applies plus and minus voltages in alternate fashion to an insulating transformer by composing a primary circuit into a full-bridge type or a half-bridge type or the like.

The single-pulse-driven type of DC-DC converter that applies the plus and minus voltages in alternate fashion to the insulating transformer allows a low-noise and low-loss switching element to be used in applications that are low in input/output voltage and relatively small in power supply capacity. Additionally, combination of soft-switching or other technology that reduces switching loss allows a switching frequency to be increased above the audible range of humans that is up to about 20 kHz, and the combination usually contributes to a release from the problem of electromagnetic noise that is associated with switching.

On the other hand, in DC power supplies intended for applications of relatively large power-supply capacities, or in DC power supplies of a high input/output voltage that require a switching element of a high withstand voltage, a switching frequency is usually difficult to increase above the audible range of humans, even by using technology such as soft-switching.

In addition, in a case of the single-pulse-driven type of DC-DC converter, since basically the current/voltage harmonics occurring are only of integral multiples of the switching frequency, electromagnetic noise that may occur will be of a relatively simple tone, thus becoming a continuous high-pitched mechanical unpleasant sound, for example, 2- to 4-kHz frequencies to which the human ear is considered to be most sensitive.

The techniques described in JP-1994-14557-A, JP-2000-184731-A, JP-2010-259326-A, JP-1999-220876-A, herein shown as Patent Documents 3 to 6, respectively, are known to mitigate such electromagnetic noise. The techniques described in Patent Documents 3 to 5 relate to the pulse width modulation (PWM) inverters that conduct subharmonics modulation to compare a modulated signal wave with a carrier wave. Such inverters control the carrier frequency in accordance with a predetermined pattern to reduce peaks of voltage/current harmonics and hence to mitigate the electromagnetic noise that may occur. The technique described in Patent Document 6 relates to a DC-DC chopper circuit. This technique, while maintaining a constant switching period and also maintaining a constant output-pulse turn-on duration, is intended to control turn-on timing in accordance with a predetermined pattern to mitigate the electromagnetic noise that may occur.

Patent Document EP 2 528 218 A2 discloses a DC power supply including a resonant circuit on a secondary side of a transformer.

### SUMMARY OF THE INVENTION

The techniques according to Patent Documents 3 to 5 each control a carrier frequency in accordance with a predetermined pattern in a pulse width modulation (PWM) inverter that conducts subharmonics modulation to compare a modulated signal wave with a carrier wave. At this time, a ratio of a pulse turn-on duration, that is, duty ratio, in the switching period is held even when the carrier frequency, or the switching period, is controlled. If the carrier frequency, or the switching period, is sufficiently high with respect to a fundamental frequency of the modulated signal wave, a fundamental wave component (amplitude) of the output voltage is maintained by holding the duty ratio.

In the single-pulse-driven type of DC-DC converter, however, if the pulse turn-on duration is controlled with each switching action, this makes it difficult to maintain a plus/minus balance of the voltage applied to the insulating transformer, and in the worst case, is likely to lead to magnetic saturation (DC-biased magnetization) of the insulating transformer. In other words, the techniques according to Patent Documents 3 to 5 are difficult to apply to the single-pulse-driven type of DC-DC converter.

In the technique of Patent Document 6 that relates to a DC-DC chopper circuit, a constant switching period is maintained and a constant output-pulse turn-on duration is also maintained, so the plus/minus balance of the voltage applied to the insulating transformer is held. This means that the technique of Patent Document 6 can also be applied to the single-pulse-driven type of DC-DC converter. The technique of Patent Document 6, however, has a problem in that a noise reduction effect obtained by applying this technique to the single-pulse-driven type of DC-DC converter technique will only be marginal because of a relatively high duty ratio.

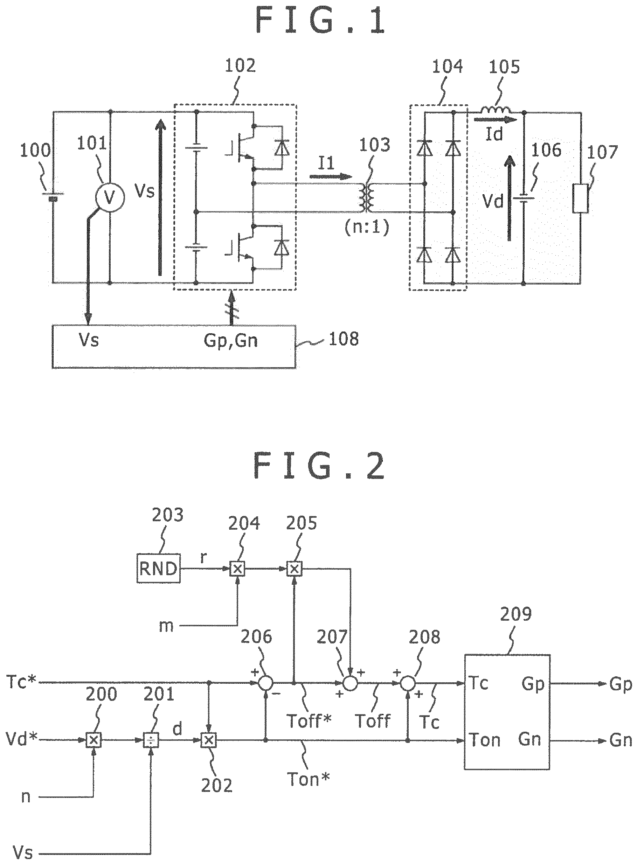

Fig. 1 shows an exemplary circuit diagram of the single-pulse-driven DC-DC converter for which the present invention is intended. The DC-DC converter shown in Fig. 1 includes: a DC voltage source 100; a DC voltage sensor 101 that detects a DC voltage supplied from the DC voltage source 100; a half-bridge converter 102 that generates an AC voltage from the DC voltage supplied from the DC voltage source 100; an insulating transformer 103 connected to an AC output side of the converter 102; a rectification circuit 104 that rectifies an AC voltage that is output from the insulating transformer 103, and then converts the AC voltage into a DC output current; a DC output reactor 105 that provides a smoother form of the DC output current which is output from the rectification circuit 104; a DC output capacitor 106 that internally stores a DC output current that is output from the DC output reactor 105; a load 107 connected in parallel to the DC output capacitor 106; and a control device 108 that receives an input of the DC voltage Vs which the DC voltage sensor 101 has detected, and outputs gate signals Gp, Gn that drive the converter 102.

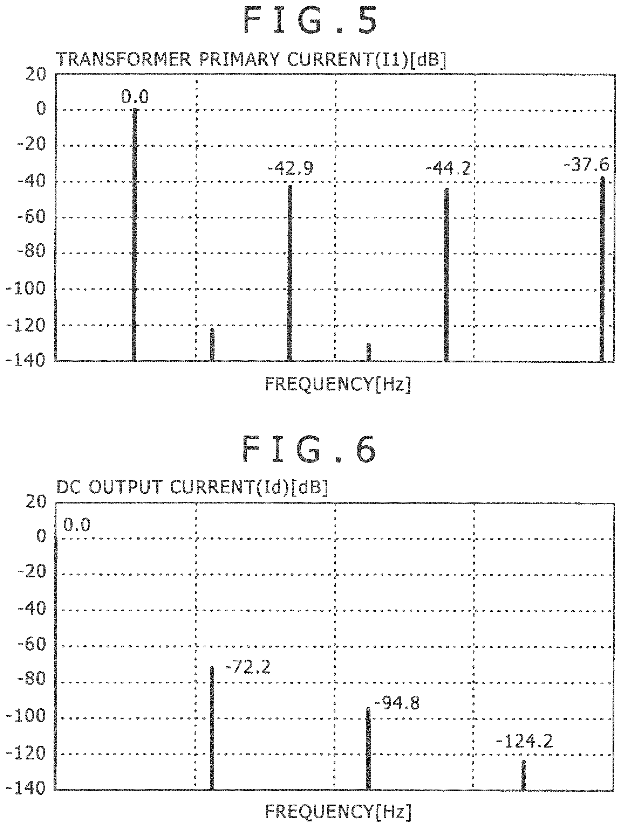

Fig. 5 shows a frequency distribution of a transformer primary current (I1) generated when the DC-DC converter shown in Fig. 1 applies no technique to reduce noise, and Fig. 6 shows a frequency distribution of the DC output current (Id) which flows through the DC output reactor. Figs. 5 and 6 assume that when the converter is driven, the switching frequency is held constant and the duty ratio calculated from a ratio between the DC input voltage Vs and a DC output voltage target value Vd* is also held constant.

Fig. 5, in which a horizontal axis denotes frequencies and a vertical axis denotes magnitudes of currents at each frequency, expressed in terms of dB, shows relative magnitudes of harmonics, plotted for a magnitude of a fundamental signal wave component as a reference of 0 dB. Odd-order harmonics of the fundamental signal wave, such as those of the first order, third order, fifth order, and seventh order, are distributed as current harmonics of the transformer primary current (I1).

Fig. 6, in which a horizontal axis denotes frequencies and a vertical axis denotes magnitudes of currents at each frequency, expressed in terms of dB, shows relative magnitudes of harmonics, plotted for a magnitude of a fundamental signal wave component as a reference of 0 dB. Even-order harmonics of the fundamental DC signal wave, such as those of the zeroth order, second order, fourth order, and sixth order, are distributed as current harmonics of the DC output current (Id).

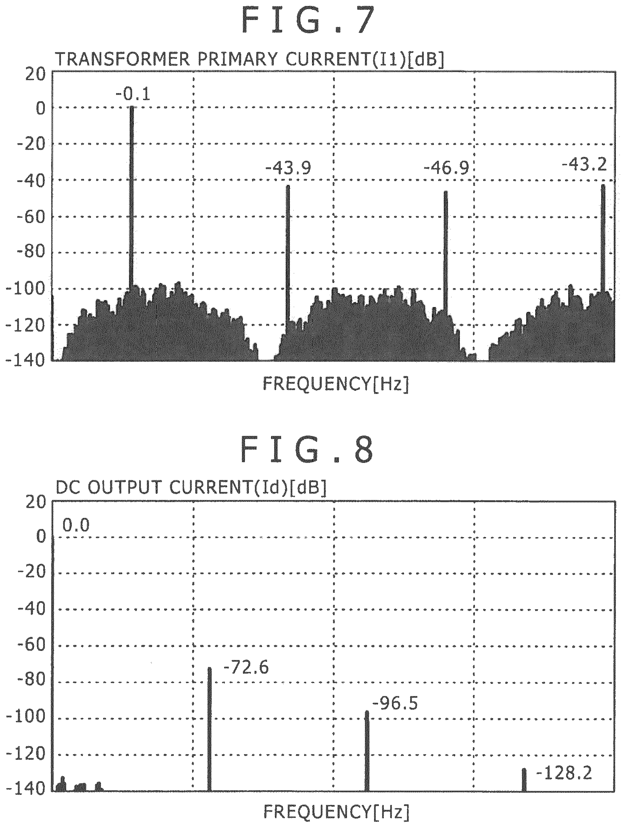

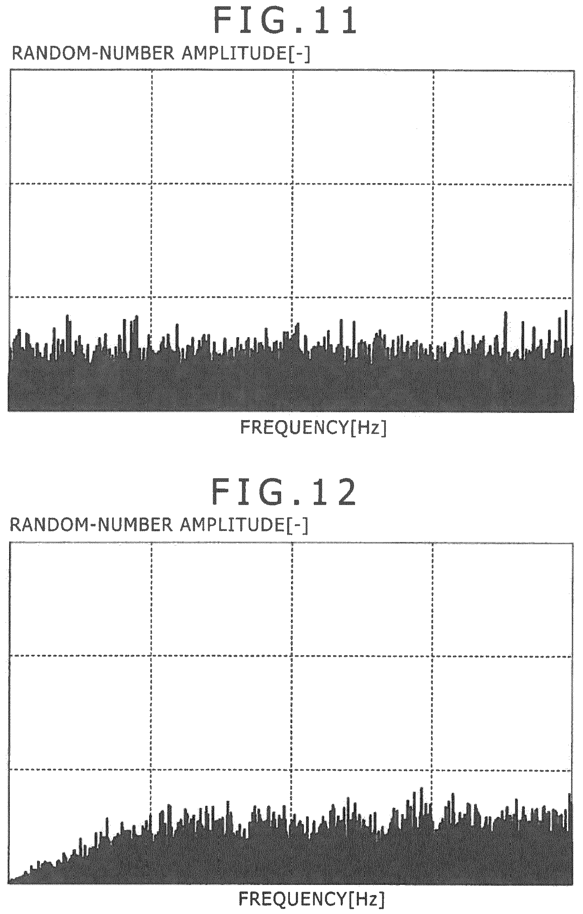

Fig. 7 shows a frequency distribution of a transformer primary current (I1) generated when the DC-DC converter shown in Fig. 1 applies the technique described in Patent Document 6 to reduce noise, and Fig. 8 shows a frequency distribution of the DC output current (Id) which flows through the DC output reactor. Figs. 7 and 8 assume that after the switching frequency has been held constant and the duty ratio calculated from the ratio between the DC input voltage Vs and the DC output voltage target value Vd* has also been held constant, pulse turn-on timing is controlled using uniformly distributed random numbers (white noise). Fig. 11 shows frequency characteristics of the uniformly distributed random numbers.

Fig. 7, in which a horizontal axis denotes frequencies and a vertical axis denotes magnitudes of currents at each frequency, expressed in terms of dB, shows relative magnitudes of harmonics, plotted for the magnitude of the fundamental signal wave component of Fig. 5 as a reference of 0 dB. Similarly, Fig. 8 shows relative magnitudes of harmonics, plotted for the magnitude of the fundamental signal wave component of Fig. 6 as a reference of 0 dB.

As can be seen from comparisons between Figs. 5 and 7 and between Figs. 6 and 8, applying the technique described in Patent Document 6 does not lead to a substantial change in the magnitudes of the current harmonics, so that the technique of Patent Document 6 is only marginally effective for reducing the electromagnetic noise due to the voltage/current harmonics.

The technique of Patent Document 6 presupposes application to a DC-DC converter (step-down chopper) and provides a low duty ratio under rated operating conditions, that is, reduces the ratio of the turn-on pulse duration in the switching period. This allows pulse turn-on timing to be controlled over a wide range and is expected to provide a certain effect for noise reduction, whereas in cases such as applying the single-pulse-driven DC-DC converter equipped with an insulating transformer, the above tends to increase the duty ratio under rated operating conditions when an efficient design is attempted. More specifically, the rate of the turn-on pulse duration in the switching period is increased, which in turn narrows the turn-on timing control range in the switching period, makes current harmonics of a specific frequency insuppressible, and renders the technique of Patent Document 6 less effective for reducing the electromagnetic noise due to the voltage/current harmonics.

The present invention has been made with the above problems in mind, and an objective of the invention is to provide means for further reducing/mitigating electromagnetic noise due to voltage/current harmonics, without magnetically saturating an insulating transformer.

In order to solve the foregoing problems, the present invention provides a direct-current power supply as set forth in claim 1.

Also, disclosed herein is a DC power supply in which a pulse turn-on duration in an output voltage signal waveform of a DC-AC power conversion circuit is controlled to a value corresponding to a DC voltage of a DC voltage source, and a switching period in the output voltage signal waveform of the DC-AC power conversion circuit is changed in accordance with a predetermined time-series signal.

The above configurational characteristics enable the DC power supply of the present invention to further reduce/mitigate electromagnetic noise due to voltage/current harmonics, without magnetically saturating an insulating transformer.

### BRIEF DESCRIPTION OF THE DRAWINGS

Other objects and advantages of the invention will become apparent from the following description of embodiments with reference to the accompanying drawings in which:
Fig. 1 shows circuit composition of the present invention;
Fig. 2 shows details of a control device shown in Fig. 1;
Fig. 3 shows waveforms that represent operation of a pulse generator shown in Fig. 2;
Fig. 4 shows current waveforms that the present invention generates;
Fig. 5 shows frequency characteristics of a transformer primary current generated when a noise reduction technique is not applied;
Fig. 6 shows frequency characteristics of a DC output current generated when a noise reduction technique is not applied;
Fig. 7 shows frequency characteristics of a transformer primary current generated according to Patent Document 6;
Fig. 8 shows frequency characteristics of a DC output current generated according to Patent Document 6;
Fig. 9 shows frequency characteristics of a transformer primary current generated in the present invention;
Fig. 10 shows frequency characteristics of a DC output current generated in the present invention;
Fig. 11 shows frequency characteristics of a signal which generates uniformly distributed random numbers;
Fig. 12 shows frequency characteristics of a signal which generates low-pass filtering random numbers;
Fig. 13 shows a DC output voltage signal waveform generated using uniformly distributed random numbers;
Fig. 14 shows another DC output voltage signal waveform generated using uniformly distributed random numbers, the waveform being obtained by increasing a capacitance of a DC output capacitor by a factor of 4;
Fig. 15 shows yet another DC output voltage signal waveform generated using uniformly distributed random numbers, the waveform being obtained by increasing the capacitance of the DC output capacitor by a factor of 16;
Fig. 16 shows a DC output voltage signal waveform generated using low-pass filtering random numbers;
Fig. 17 shows another DC output voltage signal waveform generated using low-pass filtering random numbers, the waveform being obtained by increasing the capacitance of the DC output capacitor by a factor of 4; and
Fig. 18 shows yet another DC output voltage signal waveform generated using low-pass filtering random numbers, the waveform being obtained by increasing the capacitance of the DC output capacitor by a factor of 16.

### DESCRIPTION OF THE PREFERRED EMBODIMENTS

Fig. 1 shows exemplary circuit composition of a DC power supply according to an embodiment of the present invention. In Fig. 1, the DC power supply according to the embodiment of the invention includes: a DC voltage source 100; a DC voltage sensor 101 that detects a DC voltage supplied from the DC voltage source 100; a half-bridge converter 102 that generates an AC voltage from the DC voltage supplied from the DC voltage source 100; an insulating transformer 103 connected to an AC output side of the converter 102; a rectification circuit 104 that rectifies an AC voltage that is output from the insulating transformer 103, and then converts the AC voltage into a DC output current; a DC output reactor 105 that provides a smoother form of the DC output current which is output from the rectification circuit 104; a DC output capacitor 106 that internally stores a DC output current that is output from the DC output reactor 105; a load 107 connected in parallel to the DC output capacitor 106; and a control device 108 that receives an input of the DC voltage Vs that the DC voltage sensor 101 has detected, and outputs gate signals Gp, Gn that drive the converter 102. The gate signal Gp here is a gate signal for driving a positive-side semiconductor element of the half-bridge converter 102, and the gate signal Gn here is a gate signal for driving a negative-side semiconductor element of the converter 102.

While an example in which the half-bridge converter 102 that generates an AC voltage is used as a transformer primary circuit is described below in the present embodiment, since the invention can be applied to any single-pulse-driven type of DC-DC converter that applies plus and minus voltages in alternate fashion to an insulating transformer, the invention can also be applied to circuit composition in which a primary circuit is composed into a full-bridge type or the like.

In addition, while an example of an element which converts AC into DC via a rectifier is shown and described as a transformer secondary circuit in the present embodiment, a circuit that converts AC into DC in a converter including a switching element may be applied in lieu of the rectifier.

Fig. 2 shows details of the control device 108 included in the circuit composition of Fig. 1. The control device 108 in Fig. 2 includes: a multiplier 200 that multiplies a DC output voltage target value Vd* and a primary/secondary turns ratio "n" and then calculates a primary conversion value of the DC output voltage target value Vd* from a product obtained by the multiplication; a divider 201 that calculates a duty ratio "d" by dividing the primary conversion value of the DC output voltage target value Vd* that has been output from the multiplier 200, by a DC input voltage Vs that the DC voltage sensor 101 has detected; and a multiplier 202 that multiplies a median value Tc* of a switching period by the duty ratio "d" which has been output from the divider 201, and then calculates a median value Ton* of a pulse turn-on duration. The control device further includes: a divider 206 that calculates a median value Toff* of a pulse turn-off duration by dividing the median value Ton* Of the pulse turn-on duration that has been output from the multiplier 202, by the median value Tc* of the switching period; a random-number generator 203 that generates and outputs random numbers "r" whose average value becomes zero within a range of ±1 in accordance with a predetermined time-series signal; a multiplier 204 that calculates a product of one of the random numbers "r" output from the multiplier 203, and a random-number modulation ratio "m"; and a multiplier 205 that multiplies the random number output from the multiplier 204, and the median value Toff* of the pulse turn-off duration that has been output from the divider 206, and then calculates the amount of pulse turn-off duration control from a product resulting from the multiplication. The control device further includes: an adder 207 that calculates the pulse turn-off duration Toff from a sum of the median value Toff* of the pulse turn-off duration and the amount of pulse turn-off duration control that has been output from the multiplier 205; an adder 208 that calculates the switching period Tc from a sum of the median value Ton* of the pulse turn-on duration that has been output from the multiplier 202, and the pulse turn-off duration Toff that has been output from the adder 207; and a pulse generator 209 that generates and outputs the converter-driving gate signals Gp, Gn according to the median value Ton* of the pulse turn-on duration output from the multiplier 202, and the switching period Tc output from the adder 208.

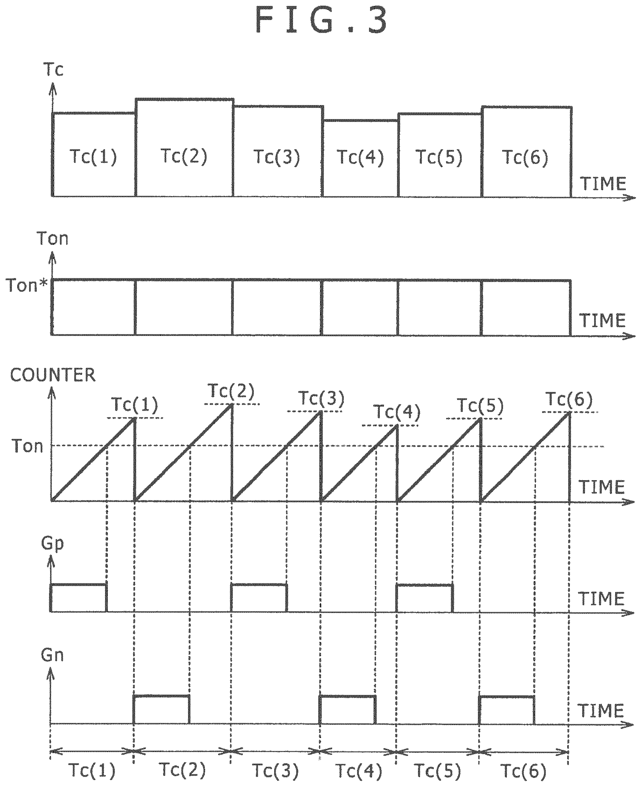

Fig. 3 shows examples of waveforms which represent operation of the pulse generator 209 in the control device 108 shown in Fig. 2. The switching period Tc in Fig. 3 takes a different value for each of cycles, and the values of Tc are expressed as Tc (1), Tc (2), Tc (3), etc. up to a maximum number of cycles, in that order. Assume that the pulse turn-on duration Ton is fixed at its median value Ton*. The pulse generator 209 has a timer counter inside it, and this counter increments a count value at a fixed rate, and zero-clears the count value each time a switching period is completed. When the count is zeroed, either the gate signal Gp or the gate signal Gn turns on, and when the count exceeds the pulse turn-on duration Ton, the gate signals Gp and Gn turn on in alternate fashion.

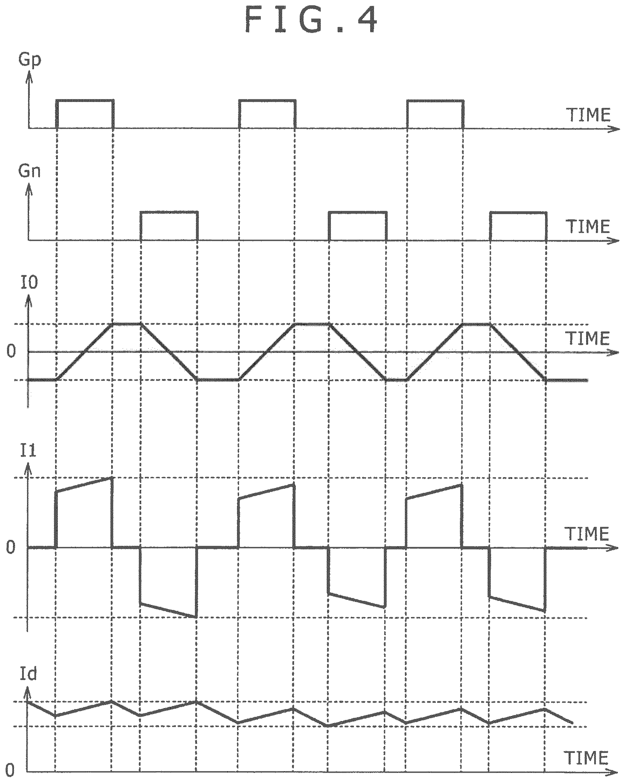

Fig. 4 shows signal waveforms of a transformer excitation current (10), transformer primary current (I1), and DC output current (Id) generated when the pulse generator 209 conducts the operation shown in Fig. 3. Fig. 4 indicates the following: although the switching period and the pulse turn-off duration are constantly changing with a random number, since pulse turn-on durations of the gate signals Gp and Gn are substantially fixed at specific values based on the DC input voltage, a substantially constant magnetic flux is also applied to the transformer and amplitude of the excitation current (10) remains invariant as well.

These facts mean that even after control of the switching period and the pulse turn-off duration, the insulating transformer is not likely to suffer magnetic saturation (DC-biased magnetization). The transformer primary current (I1) and the DC output current (Id), on the other hand, are changing in amplitude for each switching action, and are thus expected to yield a spectrum-spreading effect and a noise reduction effect.

Here, when the DC power supply outputs a constant voltage, the DC output voltage target value Vd* is held constant, so the pulse turn-on duration Ton is controlled in accordance with the DC input voltage Vs. That is to say, if the DC input voltage Vs is constant, the pulse turn-on duration Ton also becomes constant.

When the DC power supply outputs a plurality of voltages, the DC output voltage target value Vd* is changed to a plurality of values, so the pulse turn-on duration Ton is controlled in accordance with the output voltage target value Vd* and the DC input voltage Vs. That is to say, if the DC input voltage Vs is constant, the pulse turn-on duration Ton is fixed at a value corresponding to the DC output voltage target value Vd*.

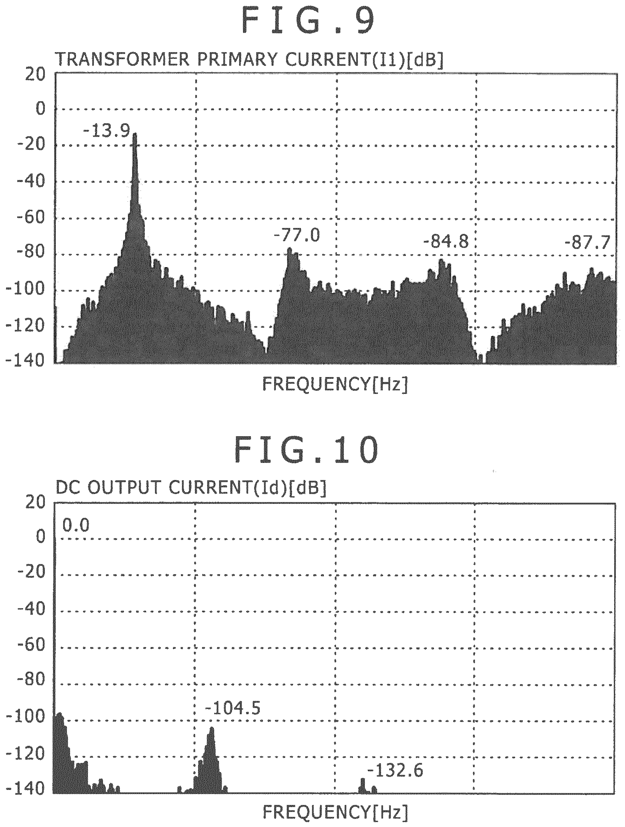

Fig. 9 shows a frequency distribution of the transformer primary current (I1) corresponding to the current waveform shown in Fig. 4, and Fig. 10 shows a frequency distribution of the DC output current (Id) which flows through the DC output reactor. The random-number generator 203 assumes generating uniformly distributed random numbers (white noise), and Fig. 11 shows frequency characteristics of a relevant signal.

Fig. 9, in which a horizontal axis denotes frequencies and a vertical axis denotes magnitudes of currents at each frequency, expressed in terms of dB, shows relative magnitudes of harmonics, plotted for the magnitude of the fundamental signal wave component of Fig. 5 as a reference of 0 dB. Similarly, Fig. 10 shows relative magnitudes of harmonics, plotted for the magnitude of the fundamental signal wave component of Fig. 6 as a reference of 0 dB.

As can be seen from comparisons between Figs. 5 and 9 and between Figs. 6 and 10, applying the present invention leads to spreading spectra of the transformer primary current (I1) and the DC output current (Id) and hence to reducing peak levels of the currents, so that the invention effectively reduces/mitigates electromagnetic noise due to the voltage/current harmonics.

Referring to Fig. 2, the random-number modulation ratio "m" needs to be set to range within 0 ≤ m ≤ 1 under the conditions that hold the pulse turn-off duration Toff negative. As the modulation ratio "m" is increased, the spectra of the currents spread and the peak levels go downward as well, but since pulsations of the DC output current Vd are augmented as a side effect, the modulation ratio "m" needs to be controlled to stay between values of 0 and 1 with an electromagnetic noise level and the DC output voltage Vd being taken into account.

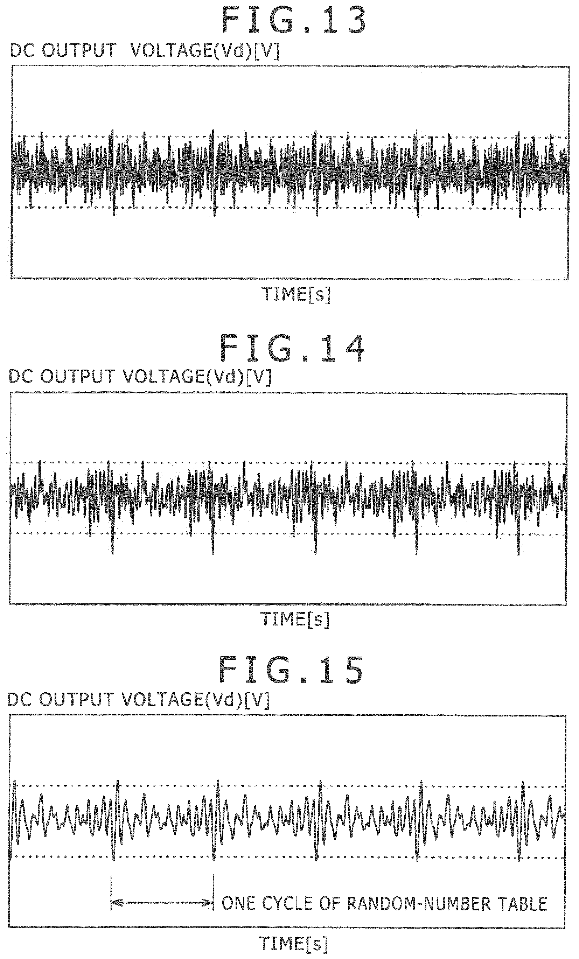

Figs. 13 and 14 show pulsation waveforms of the DC output voltage Vd. The pulsation waveform shown in Fig. 14 is a waveform obtained by increasing a capacitance of the DC output capacitor 106 by a factor of 4 relative to that corresponding to the pulsation waveform shown in Fig. 13. Similarly, the pulsation waveform shown in Fig. 15 is a waveform obtained by increasing the capacitance of the DC output capacitor 106 by a factor of 16 relative to that corresponding to the pulsation waveform shown in Fig. 13. Figs. 13 to 15 indicate that while increasing the capacitance causes high-frequency components of the DC output current Vd to significantly attenuate, low-frequency components remain substantially free from attenuation and the voltage pulsations do not change too significantly in magnitude.

Referring to Figs. 13 to 15, the DC output voltage Vd appears as if it were periodically pulsating. This is because the radon-number generator 203 is constructed so as to read out a previously calculated random-number table from a beginning thereof in order and after reaching an end of the table, read it out once again from the beginning. Since the random-number table is read out with each switching period, if a lower-limit value of a human audible frequency range is 20 Hz, the number of elements in the random-number table is desirably at least 1/20 of a switching frequency.

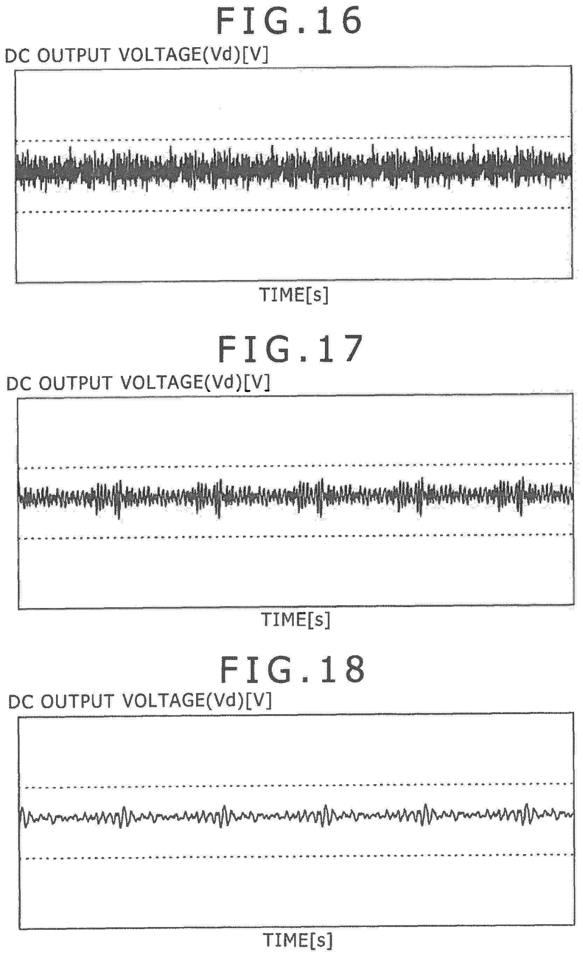

Figs. 16 to 18 show pulsation waveforms of the DC output voltage Vd that are obtained when a signal for generating low-pass filtering random-numbers is generated with the random-number generator 203. Frequency characteristics corresponding to low-frequency component filtering random numbers are shown in Fig. 12. As shown in Fig. 12, amplitude of low-frequency components in these low-frequency component filtering random numbers is reduced below that of high-frequency components. The pulsation waveform shown in Fig. 17 is a waveform obtained by increasing the capacitance of the DC output capacitor 106 by a factor of 4 relative to that corresponding to the pulsation waveform shown in Fig. 16. Similarly, the pulsation waveform shown in Fig. 18 is a waveform obtained by increasing the capacitance of the DC output capacitor 106 by a factor of 16 relative to that corresponding to the pulsation waveform shown in Fig. 16. Use of the random numbers from which the low-frequency components have been filtered out as in Fig. 12 allows a magnitude of voltage pulsations to be reduced according to the particular capacitance of the DC output capacitor.

As described above, the present invention is intended to further reduce/mitigate electromagnetic noise due to voltage/current harmonics, without magnetically saturating the insulating transformer. More specifically, the invention changes the amplitude of the transformer primary current (I1) and that of the DC output current (Id) for each switching action, thereby realizing both the spread of spectra and reduction in noise level. In addition, the invention holds the pulse turn-on duration at a substantially constant value based on the DC input voltage, and also holds substantially constant the magnetic flux that is applied to the transformer. In this way, the invention is intended to suppress changes in the amplitude of the excitation current (10) and thus to suppress the magnetic saturation (DC-biased magnetization) of the insulating transformer.

To this end, the pulse turn-on duration is held substantially constant in accordance with the DC output voltage target value Vd*, and at the same time, the switching of the semiconductor element at a primary side of the transformer is controlled so that the switching period randomly changes according to a particular occurrence pattern of the uniformly distributed random numbers (white noise).

## Claims

1. A direct-current power supply, comprising:
a DC voltage source (100);
a DC-AC power conversion circuit (102) that generates an AC voltage from a DC voltage supplied from the DC voltage source;
an insulating transformer (103) connected to an AC output side of the DC-AC power conversion circuit; and
a rectifier or AC-DC power conversion circuit (104) that converts into DC an AC voltage that is output from the insulating transformer;
wherein a pulse turn-on duration in an output voltage waveform of the DC-AC power conversion circuit (102) is controlled to a value corresponding to the DC voltage supplied from the DC voltage source (100);
wherein a pulse turn-off duration in the output voltage waveform of the DC-AC power conversion circuit (102) changes in accordance with a predetermined time-series signal; and
wherein the predetermined time-series signal is a random number whose average value becomes substantially zero within a predetermined range.

2. The direct-current power supply according to claim 1, wherein
the pulse turn-on duration in the output voltage waveform of the DC-AC power conversion circuit (102) is controlled to a value corresponding to a DC output voltage target value as well as the DC voltage supplied from the DC voltage source (100).

3. The direct-current power supply according to claim 2, wherein
the predetermined time-series signal is a random number in which amplitude of a low-frequency component is smaller than that of a high-frequency component.

4. The direct-current power supply according to any of claims 1 to 3, wherein
the DC-AC power conversion circuit (102) applies one pulse of a plus voltage and one pulse of a minus voltage in alternate fashion to the insulating transformer (103).

5. The direct-current power supply according to any of claims 1 to 3, further comprising:
a DC voltage sensor (101) that detects the DC voltage supplied from the DC voltage source (100); and
a control device (108) that receives an input of the DC voltage which the DC voltage sensor has detected, and outputs a gate signal that drives the DC-AC power conversion circuit;
wherein the control device (108) includes:
means that calculates a duty ratio from a ratio between a primary conversion value of a DC output voltage command and a DC input voltage detected by the DC voltage sensor (101);
means that calculates the pulse turn-on duration from a product between the duty ratio and a median value of a switching period;
means that calculates a median value of the pulse turn-off duration by subtracting the pulse turn-on duration from the median value of the switching period;
means that calculates the pulse turn-off duration from a product between the predetermined time-series signal and the median value of the pulse turn-off duration;
means that calculates the switching period from a sum between the pulse turn-on duration and the pulse turn-off duration; and
a pulse generator that outputs the DC-AC power conversion circuit driving gate signal according to the pulse turn-on duration and the switching period.

## Patentansprüche

1. Gleichstromleistungsversorgung mit
einer DC-Spannungsquelle (100),
einer DC-AC-Leistungswandlungsschaltung (102), die aus einer aus der DC-Spannungsquelle zugeführten DC-Spannung eine AC-Spannung erzeugt,
einem Isolationstransformator (103), der an eine AC-Ausgabeseite der DC-AC-Leistungswandlungsschaltung angeschlossen ist, und
einem Gleichrichter oder einer AC-DC-Leistungswandlungsschaltung (104), der bzw. die eine aus dem Isolationstransformator ausgegebene AC-Spannung in DC umwandelt,
wobei eine Pulsanschaltdauer in einer Ausgabespannungswellenform der DC-AC-Leistungswandlungsschaltung (102) auf einen Wert gesteuert wird, der der aus der DC-Spannungsquelle (100) zugeführten DC-Spannung entspricht,
wobei eine Pulsabschaltdauer in der Ausgabespannungswellenform der DC-AC-Leistungswandlungsschaltung (102) sich gemäß einem vorbestimmten Zeitverlaufssignal ändert, und
wobei das vorbestimmte Zeitverlaufssignal eine Zufallszahl ist, deren Durchschnittswert innerhalb eines vorbestimmten Bereichs im Wesentlichen Null wird.

2. Gleichstromleistungsversorgung nach Anspruch 1, wobei
die Pulsanschaltdauer in der Ausgabespannungswellenform der DC-AC-Leistungswandlungsschaltung (102) auf einen Wert gesteuert wird, der sowohl einem DC-Ausgabespannungszielwert als auch der aus der DC-Spannungsquelle (100) zugeführten DC-Spannung entspricht.

3. Gleichstromleistungsversorgung nach Anspruch 2, wobei
das vorbestimmte Zeitverlaufssignal eine Zufallszahl ist, in der eine Amplitude einer Niedrigfrequenzkomponente kleiner ist als die einer Hochfrequenzkomponente.

4. Gleichstromleistungsversorgung nach einem der Ansprüche 1 bis 3, wobei
die DC-AC-Leistungswandlungsschaltung (102) einen Puls einer Positivspannung und einen Puls einer Negativspannung in alternierender Weise an den Isolationstransformator (103) anlegt.

5. Gleichstromleistungsversorgung nach einem der Ansprüche 1 bis 3, ferner mit
einem DC-Spannungssensor (101), der die aus der DC-Spannungsquelle (100) zugeführte DC-Spannung erfasst, und
einer Steuervorrichtung (108), die eine Eingabe der DC-Spannung empfängt, die der DC-Spannungssensor erfasst hat, und ein Gatesignal ausgibt, das die DC-AC-Leistungswandlungsschaltung antreibt,
wobei die Steuervorrichtung (108) aufweist:
eine Einrichtung zum Berechnen einer relativen Einschaltdauer aus einem Verhältnis zwischen einem primären Konversionswert eines DC-Ausgabespannungsbefehls und einer durch den DC-Spannungssensor (101) erfassten DC-Eingabespannung,
eine Einrichtung zum Berechnen der Pulsanschaltdauer aus einem Produkt der relativen Einschaltdauer und einem Medianwert der Umschaltperiode,
eine Einrichtung zum Berechnen des Medianwerts der Pulsausschaltdauer, indem die Pulsanschaltdauer von dem Medianwert der Umschaltperiode subtrahiert wird,
eine Einrichtung zum Berechnen der Pulsabschaltdauer aus einem Produkt des vorbestimmten zeitabhängigen Signals und dem Medianwert der Pulsabschaltdauer,
eine Einrichtung zum Berechnen der Umschaltperiode aus einer Summe der Pulsanschaltdauer und der Pulsabschaltdauer, und
einen Pulsgenerator, der das DC-AC-Leistungswandlungsschaltungs-Antriebsgatesignal gemäß der Pulsanschaltdauer und der Umschaltperiode ausgibt.

## Revendications

1. Alimentation électrique à courant continu, comprenant :
une source de tension CC (100) ;
un circuit de conversion électrique CC-CA (102) qui génère une tension CA à partir d'une tension CC fournie par la source de tension CC ;
un transformateur isolant (103) connecté à un côté de sortie CA du circuit de conversion électrique CC-CA ; et
un circuit redresseur ou de conversion électrique CA-CC (104) qui convertit une tension CC en une tension CA qui est délivrée en sortie à partir du transformateur isolant ;
dans laquelle une durée d'activation d'impulsion dans une forme d'onde de tension de sortie du circuit de conversion électrique CC-CA (102) est commandée à une valeur correspondant à la tension CC fournie par la source de tension CC (100) ;
dans lequel une durée de coupure d'impulsion dans la forme d'onde de tension de sortie du circuit de conversion d'énergie CC-CA (102) change en fonction d'un signal de série temporelle prédéterminé ; et
dans laquelle le signal de série temporelle prédéterminé est un nombre aléatoire dont la valeur moyenne devient sensiblement nulle dans une plage prédéterminée.

2. Alimentation électrique à courant continu selon la revendication 1, dans laquelle
la durée d'activation d'impulsion dans la forme d'onde de tension de sortie du circuit de conversion électrique CC-CA (102) est commandée à une valeur correspondant à une valeur cible de tension de sortie CC ainsi qu'à la tension CC fournie par la source de tension CC (100).

3. Alimentation électrique à courant continu selon la revendication 2, dans laquelle
le signal de série temporelle prédéterminé est un nombre aléatoire dans lequel une amplitude d'une composante basse fréquence est inférieure à celle d'une composante haute fréquence.

4. Alimentation électrique à courant continu selon l'une quelconque des revendications 1 à 3, dans laquelle
le circuit de conversion électrique CC-CA (102) applique de manière alternée au transformateur isolant (103) une impulsion d'une tension positive et une impulsion d'une tension négative.

5. Alimentation électrique en courant continu selon l'une quelconque des revendications 1 à 3, comprenant en outre :
un capteur de tension CC (101) qui détecte la tension CC fournie par la source de tension CC (100) ; et
un dispositif de commande (108) qui reçoit une entrée de la tension CC détectée par le capteur de tension CC et émet un signal de grille qui entraîne le circuit de conversion électrique CC-CA ;
dans lequel le dispositif de commande (108) comprend :
des moyens pour calculer un rapport de service à partir d'un rapport entre une valeur de conversion primaire d'une instruction de tension de sortie CC et une tension d'entrée CC détectée par le capteur de tension CC (101) ;
des moyens pour calculer la durée d'activation d'impulsion à partir d'un produit entre le rapport de service et une valeur médiane d'une période de commutation ;
des moyens pour calculer une valeur médiane de la durée de coupure d'impulsion en soustrayant la durée d'activation d'impulsion de la valeur médiane de la période de commutation ;
des moyens pour calculer la durée de coupure d'impulsion à partir d'un produit entre le signal de série temporelle prédéterminé et la valeur médiane de la durée de coupure d'impulsion ;
des moyens pour calculer la période de commutation à partir d'une somme entre la durée d'activation d'impulsion et la durée de coupure d'impulsion ; et
un générateur d'impulsions qui émet le signal de grille d'entraînement de circuit de conversion électrique CC-CA en fonction de la durée d'activation d'impulsion et de la période de commutation.
